# EUROPÄISCHE PATENTSCHRIFT

(11) **EP 3 009 247 B1**
(45) Veröffentlichungstag und Bekanntmachung des Hinweises auf die Patenterteilung: **15.11.2017**
(21) Anmeldenummer: 15180906.8
(22) Anmeldetag: 13.08.2015
(51) Int. Cl.: B29C 31/00, B29C 33/34, B32B 39/00

(54) **VORRICHTUNG UND VERFAHREN ZUR VERARBEITUNG EINES LAGENARTIGEN MATERIALS**
DEVICE AND METHOD FOR PROCESSING A LAYER-LIKE MATERIAL
DISPOSITIF ET PROCEDE DE TRAITEMENT D'UN MATERIAU EN COUCHE

(30) Priorität: 24.09.2014 DE 102014219285
(43) Veröffentlichungstag der Anmeldung: 20.04.2016
(73) Patentinhaber: FRIMO Group GmbH, 49504 Lotte (DE)
(72) Erfinder: Streibl, Franz, 83416 Saaldorf-Surheim (DE); Rajsp, Peter, 5020 Salzburg (AT)
(74) Vertreter: Hoffmann Eitle

(56) Entgegenhaltungen:
- EP-A1- 1 234 765
- EP-A1- 1 520 682
- EP-A1- 2 522 581
- EP-A1- 2 769 923
- EP-A1- 2 848 389

## Beschreibung

### TECHNISCHES GEBIET

Die vorliegende Erfindung bezieht sich auf eine Vorrichtung zur Verarbeitung eines lagenartigen Materials gemäß Patentanspruch 1 und ein Verfahren zur Verarbeitung eines lagenartigen Materials gemäß Patentanspruch 12.

### STAND DER TECHNIK

In der Fahrzeugindustrie wird eine Vielzahl von lagenartigen Materialien mit unterschiedlichen Verfahren verarbeitet. Beispielsweise werden durch Kaschierverfahren Trägermaterialien mit einer schützenden und/oder dekorativen Schicht versehen, durch Thermoformverfahren Cockpit- und/oder Türkomponenten warm umgeformt und durch Umbugverfahren Dekormaterialien, wie Kunststofffolien, Textil oder Leder, um ein Trägermaterial umgelegt.
Der Anmelderin sind dabei lediglich Vorrichtungen und Verfahren bekannt, bei denen die verschiedenen Verarbeitungstechnologien, wie Kaschieren, Thermoformen, Umbugen etc., in separaten Verarbeitungsmaschinen bereitgestellt werden.
Der Stand der Technik stellt sich folglich dahingehend als nachteilig dar, dass zur Bereitstellung von verschiedenen Verarbeitungstechnologien für lagenartige Materialien, eine Vielzahl von Verarbeitungsmaschinen vorgesehen und angeschafft werden muss. Dies resultiert in hohen Investitionskosten sowie einem großen Platzbedarf.

In diesem Zusammenhang ist die EP 1 520 682 A1 bekannt, die eine Thermoformanlage betrifft, bei der es für einen Wechsel der Werkzeuge in einer Station vorgesehen ist, dass eine der beiden Transporteinheiten für den Transport der Folie von einer Station zur anderen Station in Richtung auf die andere Transporteinrichtung quer zur Förderrichtung verschiebbar ist.

Ferner ist die EP 1 234 765 A1 bekannt, die eine Vorrichtung an einer Tiefzieh-Verpackungsmaschine betrifft.

Eine Formungsvorrichtung und ein Thermoformverfahren sind aus der EP 2 848 389 A1 bekannt.

### DARSTELLUNG DER ERFINDUNG

In Anbetracht der Nachteile des Stands der Technik ist es die Aufgabe der vorliegenden Erfindung, eine Vorrichtung und ein Verfahren bereitzustellen, mit der/dem eine Vielzahl von Verarbeitungstechnologien für lagenartige Materialien mit geringen Investitionskosten und einem geringen Platzbedarf bereitgestellt werden kann.

Der Erfindung liegt der Gedanke zugrunde, dass die hohen Investitionskosten und der große Platzbedarf der Vorrichtungen und Verfahren im Stand der Technik vor allem darin begründet liegt, dass für jede Verarbeitungstechnologie eine eigene Verarbeitungsmaschine vorgesehen werden muss. Dies führt zu einer hohen Anzahl von Bauteilen, die sich zwischen den verschiedenen Maschinen gleichen. Beispielsweise weist jede der Maschinen ein Maschinengestell, eine Zustellbewegungseinrichtung von Ober- und/oder Unterwerkzeug, eine Schutzeinrichtung und eine Steuerung auf. Diese sich in ihrer Funktion gleichenden Bauteile resultieren nicht nur in erhöhten Investitionskosten, sondern begründen auch den großen Platzbedarf der Vorrichtungen im Stand der Technik.

Aus diesem Grund wurde im Rahmen der vorliegenden Erfindung nach einer Möglichkeit gesucht, die Anzahl von sich gleichenden Bauteilen zwischen den unterschiedlichen Verarbeitungstechnologien so stark wie möglich zu verringern. Dies erfolgt erfindungsgemäß mittels einer Basiseinrichtung, welche einen Großteil der im Stand der Technik mehrfach vorhandenen Bauteile aufweist und diese vereint für die unterschiedlichen Verarbeitungstechnologien bereitstellt. Hierfür weist die Basiseinrichtung erfindungsgemäß eine Schnittstelleneinrichtung auf, in die mindestens eine Lagenverarbeitungseinrichtung einwechselbar ist. Die Schnittstelleneinrichtung ist dabei auch derart ausgestaltet, dass verschiedene Lagenverarbeitungseinrichtungen, welche unterschiedliche Lagenverarbeitungstechnologien bereitstellen, in die Schnittstelleneinrichtung einwechselbar sind. Unter einer Lagenverarbeitungseinrichtung wird im Rahmen der vorliegenden Erfindung eine Einrichtung verstanden, mit welcher eine spezifische Technologie zum Verarbeiten eines lagenartigen Materials bereitgestellt wird. Hier kommen eine Einrichtung zum Kaschieren, eine Einrichtung zum Umbugen, eine Einrichtung zum Thermoformen oder eine Einrichtung zum Nutkaschieren in Betracht. Selbstverständlich sind hier auch weitere oder eine Kombination dieser Einrichtungen denkbar. Darüber hinaus weist die erfindungsgemäße Vorrichtung eine Aufnahmeeinrichtung auf, in der mindestens eine Lagenverarbeitungseinrichtung zumindest teilweise aufnehmbar ist. Bevorzugt ist die Aufnahmeeinrichtung dabei örtlich von der Basiseinrichtung getrennt. Ferner weist die erfindungsgemäße Vorrichtung eine Handhabungseinrichtung auf, die angeordnet, ausgestaltet und bevorzugt eingerichtet ist, eine Lagenverarbeitungseinrichtung der Basiseinrichtung von der Aufnahmeeinrichtung zuzuführen. Bevorzugt ist die Handhabungseinrichtung auch ausgestaltet und/oder eingerichtet, die Lagenverarbeitungseinrichtung in die Basiseinrichtung einzuwechseln. Bei der Handhabungseinrichtung kann es sich um eine computergesteuerte Einrichtung handeln, beispielsweise um einen Roboter. Die Handhabungseinrichtung ist ferner bevorzugt ausgestaltet und/oder eingerichtet, eine in die Schnittstelleneinrichtung eingewechselte Lagenverarbeitungseinrichtung aus der Basiseinrichtung zu entnehmen und diese der Aufnahmeeinrichtung zuzuführen und in dieser abzulegen. Ebenso umfasst die Vorrichtung mindestens zwei Lagenverarbeitungseinrichtungen, die unterschiedliche Lagenverarbeitungstechnologien ausgewählt aus Kaschieren, Umbugen, Thermoformen oder Nutkaschieren, bereitstellen. Die Lagenverarbeitungseinrichtungen sind dabei jeweils ausgestaltet, in die Schnittstelleneinrichtung der Basiseinrichtung eingewechselt zu werden. Ferner sind die Lagenverarbeitungseinrichtungen ausgestaltet, in der Aufnahmeeinrichtung zumindest teilweise aufgenommen zu werden. Die Lagenverarbeitungseinrichtungen können im Rahmen der vorliegenden Erfindung mehrere strukturell voneinander getrennte Bauteile aufweisen, wobei mindestens eines der Bauteile in der Aufnahmeeinrichtung aufnehmbar ist. Die einzelnen Lagenverarbeitungseinrichtungen weisen ferner bevorzugt lediglich Bauteile auf, welche diese von anderen Lagenverarbeitungseinrichtungen unterscheiden, wobei Bauteile, welche allen Lagenverarbeitungseinrichtungen gemein sind, bevorzugt in der Basiseinrichtung vereint sind.
Die erfindungsgemäße Vorrichtung führt zu dem Vorteil, dass in lediglich einer Vorrichtung mehrere Verarbeitungstechnologien bereitgestellt werden können. Dies resultiert in einem geringen Platzbedarf sowie reduzierten Investitionskosten. Darüber hinaus wird eine modular ausgestaltete Vorrichtung bereitgestellt. So kann ein Benutzer eine Basisausgestaltung der Vorrichtung umfassend die Basiseinrichtung, die Handhabungseinrichtung, die Aufnahmeeinrichtung und zwei Lagenverarbeitungseinrichtungen anschaffen und diese Basisausgestaltung bei Bedarf durch weitere Verarbeitungstechnologien erweitern, indem weitere Lagenverarbeitungseinrichtungen hinzugefügt werden. Dies resultiert in einer Vorrichtung mit einer extrem hohen Produktionsflexibilität- und Variabilität. Die erfindungsgemäße Vorrichtung ermöglicht ferner eine maximale Standzeit, da wartungsanfälligere Bauteile vor allem in den Lagenverarbeitungseinrichtungen vorgesehen sind. Bei einer erforderlichen Überholung eines derartigen Bauteils einer Lagenverarbeitungseinrichtung kann eine weitere Lagenverarbeitungseinrichtung in die Basiseinrichtung eingewechselt und der Fertigungsbetrieb fortgesetzt werden.

Die Lagenverarbeitungseinrichtungen sind erfindungsgemäß ausgewählt aus einer Kaschiereinrichtung, insbesondere Presskaschiereinrichtung, einer Umbugeinrichtung, einer Thermoformeinrichtung und einer Nutkaschiereinrichtung. Besonders bevorzugt kann die Vorrichtung eine Presskaschiereinrichtung, eine Umbugeinrichtung, eine Thermoformeinrichtung und eine Nutkaschiereinrichtung aufweisen. Mit einer derartig ausgestalteten Vorrichtung wird es ermöglicht, in lediglich einer Vorrichtung nahezu alle für die Herstellung von Fahrzeuginnenverkleidungsteilen relevanten Verarbeitungstechnologien bereitzustellen. Demnach wird eine kostengünstige Herstellung von Fahrzeuginnenverkleidungsteilen ermöglicht, da die Vorrichtung vergleichsweise geringe Investitionskosten aufweist und durch die örtliche Nähe der unterschiedlichen Verarbeitungstechnologien kurze Fertigungszeiten realisierbar sind.

Bevorzugt weist eine und besonders bevorzugt alle Lagenverarbeitungseinrichtungen ein Unterwerkzeug und ein und besonders bevorzugt mehrere Oberwerkzeug(e) auf. Die mehreren Oberwerkzeuge, zum Beispiel zwei Oberwerkzeuge, können dabei übereinander gekoppelt angeordnet werden. Im Rahmen der vorliegenden Erfindung wird unter einem Unterwerkzeug ein Werkzeug verstanden, welches unterhalb des dazugehörigen Oberwerkzeugs in die Basiseinrichtung einwechselbar ist. Unter- und Oberwerkzeug sind dabei jeweils derart ausgestaltet, dass diese in Verbindung miteinander eine angestrebte Verarbeitung des lagenartigen Materials ermöglichen. Insbesondere für Verform- und/oder Umformprozesse des lagenartigen Materials ermöglicht eine derartige Ausgestaltung eine hochqualitative und kostengünstige Fertigung.

Die Schnittstelleneinrichtung der erfindungsgemäßen Vorrichtung kann eine erste Schnittstelle zum Einwechseln eines Oberwerkzeugs und eine zweite Schnittstelle zum Einwechseln eines Unterwerkzeugs einer Lagenverarbeitungseinrichtung aufweisen. Hierdurch wird eine Verarbeitung des lagenartigen Materials mit der Basiseinrichtung ermöglicht, bei welcher Unter- und Oberwerkzeuge verwendet werden. Wie bereits zuvor ausgeführt, ermöglicht dies eine hochqualitative und kostengünstige Verarbeitung der lagenartigen Materialien. Darüber hinaus führt das Vorsehen von zwei Schnittstellen zu einer großen Fertigungsvariabilität, da beispielsweise Ober- und Unterwerkzeug unabhängig voneinander in die Basiseinrichtung einwechselbar sind.

In einer bevorzugten Ausführungsform weist die Basiseinrichtung eine Hubeinrichtung zur Relativverstellung eines eingewechselten Ober- und Unterwerkzeugs auf. Hierdurch werden auf eine einfache und kostengünstige Weise Verform- und Umformprozesse des lagenartigen Materials in der Basiseinrichtung ermöglicht. In der Erfindung können insbesondere zwei Oberwerkzeuge aneinander gekoppelt und übereinander angeordnet mit einem Obertisch angetrieben werden, wo bisher zwei Obertische erforderlich waren.

Die Basiseinrichtung weist dabei bevorzugt keine Heizeinrichtung auf. Dies führt zu einer kostengünstigen Basiseinrichtung mit einer geringen Komplexität. Eine derartige Ausgestaltung ist insbesondere dahingehend vorteilhaft, dass lediglich für einen Teil der Lagenverarbeitungstechnologien eine Heizeinrichtung erforderlich ist. Möchte der Benutzer die Vorrichtung nur mit Lagenverarbeitungseinrichtungen betreiben, die keine Heizeinrichtung erfordern, muss er im Rahmen dieser bevorzugten Ausgestaltung die Kosten der nicht erforderlichen Heizeinrichtung nicht tragen.

Dabei kann die Vorrichtung eine Heizeinrichtung aufweisen, welche bevorzugt so angeordnet ist, dass diese separat von der Basiseinrichtung vorgesehen ist. Mittels der Heizeinrichtung können beispielsweise lagenartige Materialien, die bei Umgebungstemperatur schlecht oder nicht verformbar sind, in einen leicht verformbaren Zustand durch Erwärmung gebracht werden. Demnach wird die Bearbeitungsvielfalt in der Vorrichtung im Rahmen dieser bevorzugten Ausgestaltung erhöht. Die Heizeinrichtung kann dabei bevorzugt so angeordnet sein, dass dieser mit der Handhabungseinrichtung das lagenartige Material von der Basiseinrichtung zuführbar ist. Eine derartige Ausgestaltung ermöglicht die Bestückung der Heizeinrichtung mittels der Handhabungseinrichtung, was kurze Fertigungszeiten ermöglicht.

Bevorzugt weist die Vorrichtung ferner eine Zuführeinrichtung auf, die ausgestaltet sein kann, das lagenartige Material der Basiseinrichtung zuzuführen. Eine derartige Ausgestaltung ermöglicht einen hohen Automatisierungsgrad und demnach geringe Fertigungszeiten- und Kosten.

In einer weiteren bevorzugten Ausführungsform weist die Vorrichtung eine Bearbeitungseinrichtung, insbesondere eine Schneid- und/oder Stanzeinrichtung für das lagenartige Material auf. Diese Bearbeitungseinrichtung kann dabei in die Schnittstelleneinrichtung der Basiseinrichtung einwechselbar und/oder in der Aufnahmeeinrichtung aufnehmbar sein. Dies führt zu dem Vorteil, dass Rollenware in der erfindungsgemäßen Vorrichtung verarbeitet werden kann und die Vorrichtung einen erhöhten Automatisierungsgrad aufweist. Ferner wird die Bearbeitungsvielfalt erhöht.

Dabei kann die Vorrichtung ferner eine Vakuumeinrichtung zur Erzeugung eines Vakuums aufweisen. Unter einer Vakuumeinrichtung im Rahmen der vorliegenden Erfindung wird eine Einrichtung zum Erzeugen eines Unterdrucks zur Umgebung verstanden. Diese Vakuumeinrichtung kann dabei besonders bevorzugt in der Basiseinrichtung vorgesehen sein. Mittels der Vakuumeinrichtung kann das lagenartige Material schnell, präzise und kostengünstig verformt werden. Darüber hinaus ermöglicht die Vakuumeinrichtung eine erhöhte Bearbeitungsvielfalt der Vorrichtung.

In einer weiteren Zielsetzung stellt die vorliegende Erfindung ein Verfahren zur Verarbeitung eines lagenartigen Materials, das bevorzugt zumindest abschnittsweise aus Kunststoff, Textil, Leder oder einer Kombination davon besteht, bereit, welches eine der zuvor beschriebenen Vorrichtungen verwendet. Das Verfahren umfasst dabei das Zuführen einer Lagenverarbeitungseinrichtung von der Aufnahmeeinrichtung zu der Basiseinrichtung mit der Handhabungseinrichtung, bevorzugt das Einwechseln der Lagenverarbeitungseinrichtung in die Schnittstelleneinrichtung der Basiseinrichtung mit der Handhabungseinrichtung, das Zuführen eines lagenartigen Materials zu der Basiseinrichtung und das Verarbeiten des lagenartigen Materials mit der eingewechselten Lagenverarbeitungseinrichtung.

Darüber hinaus kann das Verfahren die Schritte des Entnehmens der Lagenverarbeitungseinrichtung aus der Basiseinrichtung mit der Handhabungseinrichtung, das Zuführens und Ablegens der entnommenen Lagenverarbeitungseinrichtung in der Aufnahmeeinrichtung mit der Handhabungseinrichtung, das Zuführen einer weiteren Lagenverarbeitungseinrichtung zu der Basiseinrichtung mit der Handhabungseinrichtung und bevorzugt das Einwechseln der weiteren Lagenverarbeitungseinrichtung in die Schnittstelleneinrichtung der Basiseinrichtung mit der Handhabungseinrichtung umfassen.

Hinsichtlich der Vorteile dieser Verfahren wird auf die Vorteile der entsprechenden Vorrichtung verwiesen.

### DETAILLIERTE BESCHREIBUNG DER ZEICHNUNGEN

Fig. 1 zeigt eine isometrische Ansicht der Vorrichtung einer bevorzugten Ausführungsform der vorliegenden Erfindung.
Fig. 2 zeigt eine Draufsicht auf die Vorrichtung der bevorzugten Ausführungsform der vorliegenden Erfindung.

### DETAILLIERTE BESCHREIBUNG EINER BEVORZUGTEN AUSFÜHRUNGSFORM

Im Folgenden wird eine bevorzugte Ausführungsform der vorliegenden Erfindung unter Bezugnahme auf die begleitenden Zeichnungen beschrieben.

Die bevorzugte Ausführungsform der vorliegenden Erfindung ist zur Verarbeitung eines lagenartigen Materials geeignet. Unter einem lagenartigen Material wird im Rahmen der vorliegenden Erfindung bevorzugt ein folien-, bogen- oder plattenähnliches Material verstanden. So kann dieses Material eine Kunststofffolie, eine Kunststoffplatte, eine Textilbahn oder eine Lederbahn sein. Selbstverständlich sind hier auch andere lagenartige Materialien denkbar. Das lagenartige Material kann bei Umgebungstemperatur leicht oder schwer bis gar nicht verformbar sein. Das lagenartige Material kann beispielsweise in Rollenform, in Form einer Platte oder einer anderen Art und Weise bereitgestellt werden.

Die bevorzugte Ausführungsform der vorliegenden Erfindung kann in der Automobilindustrie für die Fertigung von Innenraumverkleidungen, insbesondere Cockpit- und Türkomponenten, aber auch in der Sanitärindustrie, Medizin- oder Verpackungsindustrie, für Büroartikel, in der Sport- und Freizeitindustrie sowie weiteren Industrien eingesetzt werden. Beispielsweise kann die vorliegende bevorzugte Ausführungsform zur Herstellung von Instrumententafeln, Tür- und/oder Seitenverkleidungen, Hutablagen, Armauflagen, Sitzrückenwänden, Säulenverkleidungen und/oder Kofferraumverkleidungen in der Automobilindustrie eingesetzt werden.

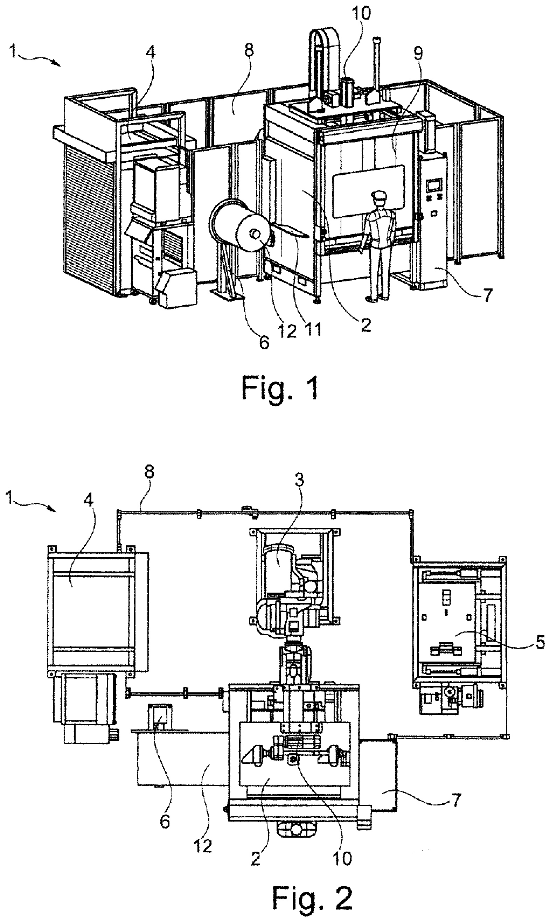

Die Vorrichtung 1 der bevorzugten Ausführungsform ist in Fig. 1 in einer isometrischen und in Fig. 2 in einer Draufsicht dargestellt. Die Vorrichtung weist eine Basiseinrichtung 2, einen Roboter 3 als Handhabungseinrichtung, eine Aufnahmeeinrichtung 4, eine Heizeinrichtung 5, eine Zuführeinrichtung 6 sowie eine Steuereinrichtung 7 auf.

Die Aufnahmeeinrichtung 4, die Basiseinrichtung 2 sowie die Heizeinrichtung 5 sind in dieser Reihenfolge auf einem annäherungsweisen Halbkreis angeordnet, in dessen Zentrum der Roboter 3 vorgesehen ist. Die Basiseinrichtung 2, die Aufnahmeeinrichtung 4 und die Heizeinrichtung 5 sind in Bezug auf den Roboter 3 derart angeordnet, dass diesen mit dem Roboter 3 jeweils ein Werkstück, zum Beispiel ein lagenartiges Material, zuführbar ist. Selbstverständlich sind hier auch weitere Anordnungen denkbar.

Freiräume zwischen der Basiseinrichtung 2, der Aufnahmeeinrichtung 4 und der Heizeinrichtung 5 sind bevorzugt mit einem Zaun 8 verschlossen, sodass der Roboter 3 in einer abgeschlossenen Fertigungszelle steht.

Die Basiseinrichtung 2 ist kastenförmig ausgebildet und weist auf deren Vorderseite ein Rolltor 9 und/oder Lichtschranke zur Bestückung der Fertigungszelle auf. Auf der Rückseite, also der Seite, die dem Rolltor 9 gegenüberliegt, ist die Basiseinrichtung 2 offen ausgestaltet. Darüber hinaus weist die Basiseinrichtung 2 eine Schnittstelleneinrichtung auf, die in den Zeichnungen nicht gezeigt ist. Die Schnittstelleneinrichtung umfasst eine erste und eine zweite Schnittstelle, die im Innenraum der Basiseinrichtung 2 vorgesehen sind. Die erste Schnittstelle ist in einem oberen Abschnitt der Basiseinrichtung 2 und die zweite Schnittstelle in einem unteren Abschnitt der Basiseinrichtung 2 vorgesehen. In die Schnittstellen sind jeweils Lagenverarbeitungseinrichtungen einwechselbar. Unter einwechselbar wird im Rahmen der Erfindung bevorzugt verstanden, dass die Lagenverarbeitungseinrichtungen auf einfache Weise mit diesen Schnittstellen zum Beispiel über einen Einrastmechanismus verbunden werden können, ohne dass zusätzliche Verbindungsmittel, wie beispielsweise extern angebrachte Klemmen oder Schrauben, erforderlich sind. Ferner weist die Basiseinrichtung 2 eine Hubeinrichtung 10 auf, die an der Ober- und/oder Unterseite der Basiseinrichtung 2 angebracht ist und mittels der die obere Schnittstelle und untere Schnittstelle in vertikaler Richtung in Bezug zueinander verfahrbar sind. Die untere Schnittstelle ist bevorzugt nicht verschiebbar, sondern in Relation zur sonstigen Basiseinrichtung 2 örtlich fixiert ausgebildet. Bevorzugt ist die Hubeinrichtung 10 mittels zwei oder mehreren vertikalen Führungsstangen und einem Motor ausgebildet. Darüber hinaus weist die Basiseinrichtung 2 bevorzugt eine Kühleinrichtung auf, mittels der ein in die Basiseinrichtung 2 eingeführtes Werkstück gekühlt werden kann. In der vorliegenden bevorzugten Ausführungsform weist die Basiseinrichtung 2 ferner eine seitliche Zuführöffnung 11 zum Einführen eines lagenartigen Materials in den Innenraum der Basiseinrichtung 2 auf. Das Zuführen des lagenartigen Materials kann auch durch den Bediener als Zuschnitt erfolgen.

Bei dem Roboter 3 kann es sich um einen herkömmlichen Industrieroboter handeln, der bevorzugt fünf Achsen aufweist. Der Roboter 3 weist dabei bevorzugt eine Greifeinrichtung zum Greifen und Halten von Lagenverarbeitungseinrichtungen auf.

Die Aufnahmeeinrichtung 4 ist bevorzugt als kastenförmiges Bauteil ausgestaltet, welches in Richtung des Roboters 3 offen ausgestaltet ist. Dabei weist die Einrichtung 4 mehrere Einschubbereiche, die vertikal übereinander angeordnet sind, zur Aufnahme von verschiedenen Lagenverarbeitungseinrichtungen auf. Hier sind selbstverständlich auch andere Ausgestaltungen denkbar.

Die Heizeinrichtung 5 ist von der Basiseinrichtung 2 separat vorgesehen und weist einen Einschub zur Aufnahme eines lagenartigen Materials, welches beispielsweise in einen Spannrahmen eingespannt ist, auf.

Darüber hinaus weist die Vorrichtung 1 eine Zuführeinrichtung 6 auf, die ein lagenartiges Material 12 in Rollenform aufnimmt und von der das lagenartige Material der Basiseinrichtung 2 zugeführt werden kann.

Ferner weist die Vorrichtung 1 verschiedene Lagenverarbeitungseinrichtungen auf. Die vorliegende bevorzugte Ausführungsform weist bevorzugt vier verschiedene Lagenverarbeitungseinrichtungen, nämlich eine Presskaschiereinrichtung, eine Umbugeinrichtung, eine Thermoformeinrichtung und eine Nutkaschiereinrichtung auf. Die einzelnen Lagenverarbeitungseinrichtungen weisen dabei für die Verarbeitungstechnologie spezifische Bauteile auf. Die Einrichtungen sind insbesondere jeweils aus einem Oberwerkzeug und einem Unterwerkzeug ausgebildet. Das Unterwerkzeug kann in die untere Schnittstelle der Basiseinrichtung 2 und das Oberwerkzeug in die obere Schnittstelle der Basiseinrichtung 2 einwechselbar sein. Das/die Oberwerkzeuge und/oder Unterwerkzeug können aus zwei oder mehreren Einheiten, zum Beispiel einem Beschnittwerkzeug und einem Formhilfewerkzeug, ausgebildet sein. Dabei sind zur Durchführung der jeweiligen Verarbeitungen, beispielsweise dem Presskaschieren, sowohl das Unter- als auch das Oberwerkzeug erforderlich. Ober- und Unterwerkzeug sind bevorzugt jeweils getrennt voneinander in die Basiseinrichtung 2 mit dem Roboter 3 einwechselbar. Dabei können die Werkzeuge jeweils in einer plattenähnlichen Weise ausgebildet sein, sodass diese in entsprechende Führungen der Basiseinrichtung 2 und Aufnahmeeinrichtung 4 einschiebbar sind. Die Lagenverarbeitungseinrichtungen und/oder die Schnittstelleinrichtung können dabei so ausgebildet sein, dass die Lagenverarbeitungseinrichtungen in die Schnittstellenrichtung mittels einer oder mehreren Schnellverriegelung(en) und/oder einer oder mehreren Kupplung(en) einwechselbar sind.

Ferner können die Lagenverarbeitungseinrichtungen eine Werkzeugcodierung und die Basiseinrichtung 2 eine Erkennung aufweisen, sodass sichergestellt werden kann, dass das richtige Werkzeug eingewechselt ist.

Darüber hinaus weist die Vorrichtung 1 eine Steuerung 7 auf, die bevorzugt eingerichtet ist, folgendes Verfahren auszuführen: Der Roboter 3 greift mit seiner Greifeinrichtung ein Oberwerkzeug einer ersten Lagenverarbeitungseinrichtung in der Aufnahmeeinrichtung 4 und führt dieses der Basiseinrichtung 2 zu. Hier wird das Oberwerkzeug mit dem Roboter in die Basiseinrichtung 2 eingeschoben und in die obere Schnittstelle der Basiseinrichtung 2 eingewechselt. Anschließend greift der Roboter 3 mit seiner Greifeinrichtung das dazugehörige Unterwerkzeug dieser Lagenverarbeitungseinrichtung in der Aufnahmeeinrichtung 4 und führt dieses der Basiseinrichtung 2 zu. Daraufhin wird das Unterwerkzeug mit dem Roboter 3 in die Basiseinrichtung 2 eingeschoben und in die untere Schnittstelle der Basiseinrichtung 2 eingewechselt. Mittels der Zuführeinrichtung 6 wird der Basiseinrichtung 2 ein lagenartiges Material 12 zugeführt, welches anschließend in der Basiseinrichtung 2 in einen Spannrahmen gespannt wird. Der Roboter 3 greift den Spannrahmen mit dem eingespannten lagenartigen Material und führt diesen der Heizeinrichtung 5 zu. Hier wird der Spannrahmen mit dem lagenartigen Material in den Einschub der Heizeinrichtung 5 eingeschoben und das lagenartige Material erwärmt, damit dieses anschließend leichter verformbar ist. Dabei kann der Roboter 3 den Spannrahmen in der Heizeinrichtung 5 ablegen oder diesen während des Erwärmens halten. Im Anschluss daran führt der Roboter 3 den Spannrahmen mit dem lagenartigen Material der Basiseinrichtung 2 zu und legt diesen darin ab. Anschließend wird das erwärmte lagenartige Material durch das eingewechselte Ober- bzw. Unterwerkzeug der Lagenverarbeitungseinrichtung verarbeitet. Das Werkstück wird aus der Basiseinrichtung 2 entnommen. Der Roboter 3 entnimmt das Ober- und/oder Unterwerkzeug der Lagenverarbeitungseinrichtung aus der Basiseinrichtung 2 und führt diese(s) der Aufnahmeeinrichtung 4 zu und legt diese(s) darin ab. Anschließend führt der Roboter 3 der Basiseinrichtung 2 ein Ober- bzw. Unterwerkzeug einer weiteren Lagenverarbeitungseinrichtung, die eine Technologie bereitstellt, welche sich von der vorherigen Verarbeitungstechnologie unterscheidet, der Basiseinrichtung 2 zu und wechselt diese in analoger Weise in die Basiseinrichtung 2 ein. Der zuvor beschriebene Ablauf kann nun wiederholt werden.

## Patentansprüche

1. Vorrichtung (1) zur Verarbeitung von einem lagenartigen Material (12), welches bevorzugt zumindest abschnittsweise aus Kunststoff, Textil, Leder oder einer Kombination davon besteht, mit
einer Basiseinrichtung (2), die eine Schnittstelleneinrichtung zum Einwechseln mindestens einer Lagenverarbeitungseinrichtung aufweist,
einer Aufnahmeeinrichtung (4) zum Aufnehmen von mindestens einer Lagenverarbeitungseinrichtung,
einer Handhabungseinrichtung (3) zum Zuführen einer Lagenverarbeitungseinrichtung von der Aufnahmeeinrichtung (4) zu der Basiseinrichtung (2), und mindestens zwei Lagenverarbeitungseinrichtungen, welche in die Schnittstelleneinrichtung der Basiseinrichtung (2) einwechselbar sowie in der Aufnahmeeinrichtung (4) zumindest teilweise aufnehmbar sind,
**dadurch gekennzeichnet, dass** die mindestens zwei Lagenverarbeitungseinrichtungen unterschiedliche Lagenverarbeitungstechnologien bereitstellen,
wobei die Lagenverarbeitungseinrichtungen ausgewählt sind aus einer Kaschiereinrichtung, insbesondere Presskaschiereinrichtung, einer Umbugeinrichtung, einer Thermoformeinrichtung und einer Nutkaschiereinrichtung.

2. Vorrichtung (1) nach Anspruch 1, bei der mindestens eine, bevorzugt alle, Lagenverarbeitungseinrichtungen ein Unterwerkzeug und ein Oberwerkzeug aufweisen, wobei die Lagenverarbeitungseinrichtung besonders bevorzugt mehrere Oberwerkzeuge aufweist.

3. Vorrichtung (1) nach einem der vorhergehenden Ansprüche, bei der die Schnittstelleneinrichtung eine erste Schnittstelle zum Einwechseln eines Oberwerkzeugs und eine zweite Schnittstelle zum Einwechseln eines Unterwerkzeugs einer Lagenverarbeitungseinrichtung aufweist.

4. Vorrichtung (1) nach Anspruch 3, bei der die Basiseinrichtung (2) eine Hubeinrichtung (10) zur Relativverstellung eines eingewechselten Ober- und Unterwerkzeugs aufweist.

5. Vorrichtung (1) nach einem der vorhergehenden Ansprüche, wobei diese eine Presskaschiereinrichtung, eine Umbugeinrichtung, eine Thermoformeinrichtung und eine Nutkaschiereinrichtung aufweist.

6. Vorrichtung (1) nach einem der vorhergehenden Ansprüche, bei der die Basiseinrichtung (2) keine Heizeinrichtung aufweist.

7. Vorrichtung (1) nach einem der vorhergehenden Ansprüche, die ferner eine Heizeinrichtung (5) aufweist, welche bevorzugt so angeordnet ist, dass diese von der Basiseinrichtung (2) separat vorgesehen ist und/oder dieser mit der Handhabungseinrichtung (3) das lagenartige Material (12) von der Basiseinrichtung (2) zuführbar ist.

8. Vorrichtung (1) nach einem der vorhergehenden Ansprüche, bei der die Basiseinrichtung (2) eine Kühleinrichtung zum Kühlen eines Werkstücks aufweist.

9. Vorrichtung (1) nach einem der vorhergehenden Ansprüche mit ferner einer Zuführeinrichtung (6) für das lagenartige Material (12), die bevorzugt ausgestaltet ist, das Material der Basiseinrichtung (2) zuzuführen.

10. Vorrichtung (1) nach einem der vorhergehenden Ansprüche mit ferner einer Bearbeitungseinrichtung, insbesondere Schneid- und/oder Stanzeinrichtung, für das lagenartige Material (12), die bevorzugt in die Schnittstelleneinrichtung der Basiseinrichtung (2) einwechselbar und/oder in der Aufnahmeeinrichtung (4) aufnehmbar ist.

11. Vorrichtung (1) nach einem der vorhergehenden Ansprüche mit ferner einer Vakuumeinrichtung, die bevorzugt in der Basiseinrichtung (2) vorgesehen ist.

12. Verfahren zur Verarbeitung eines lagenartigen Materials (12), das bevorzugt zumindest abschnittsweise aus Kunststoff, Textil, Leder oder einer Kombination davon besteht, unter Verwendung der Vorrichtung (1) nach einem der vorhergehenden Ansprüche, umfassend
Zuführen einer Lagenverarbeitungseinrichtung von der Aufnahmeeinrichtung (4) zu der Basiseinrichtung (2) mit der Handhabungseinrichtung (3), wobei die Handhabungseinrichtung (3) die Lagenverarbeitungseinrichtung bevorzugt in die Schnittstelleneinrichtung der Basiseinrichtung (2) einwechselt,
Zuführen eines lagenartigen Materials zu der Basiseinrichtung (2),
Verarbeiten des lagenartigen Materials (12) mit der eingewechselten Lagenverarbeitungseinrichtung.

13. Verfahren nach Anspruch 12 mit ferner den Schritten
Entnehmen der Lagenverarbeitungseinrichtung aus der Basiseinrichtung (2) mit der Handhabungseinrichtung (3),
Zuführen und Ablegen der entnommenen Lagenverarbeitungseinrichtung in der Aufnahmeeinrichtung (4) mit der Handhabungseinrichtung (3),
Zuführen einer weiteren Lagenverarbeitungseinrichtung zu der Basiseinrichtung (2) mit der Handhabungseinrichtung (3), wobei die Handhabungseinrichtung (3) die weitere Lagenverarbeitungseinrichtung bevorzugt in die Schnittstelleneinrichtung der Basiseinrichtung (2) einwechselt.

## Claims

1. Device (1) for processing a layer-like material (12) which preferably consists at least in sections of plastic, textile, leather or a combination thereof, having
a base device (2) which has an interface device for substituting at least one layer-processing device,
a receiving device (4) to accommodate at least one layer-processing device,
a handling device (3) for feeding a layer-processing device from the receiving device (4) to the base device (2), and
at least two layer-processing devices which can be substituted into the interface device of the base device (2) and can be at least partly accommodated in the receiving device (4),
**characterised in that** the at least two layer-processing devices provide different layer-processing technologies,
wherein the layer-processing devices are selected from a laminating device, in particular pressure-laminating device, an edge-folding device, a thermoforming device and a groove-laminating device.

2. Device (1) according to claim 1, in which at least one, preferably all, layer-processing devices have a lower tool and an upper tool, wherein the layer-processing device particularly preferably has several upper tools.

3. Device (1) according to one of the preceding claims, in which the interface device has a first interface for substituting an upper tool and a second interface for substituting a lower tool of a layer-processing device.

4. Device (1) according to claim 3, in which the base device (2) has a lifting device (10) for relative adjustment of a substituted upper tool and lower tool.

5. Device (1) according to one of the preceding claims, wherein the latter has a pressure-laminating device, an edge-folding device, a thermoforming device and a groove-laminating device.

6. Device (1) according to one of the preceding claims, in which the base device (2) does not have a heating device.

7. Device (1) according to one of the preceding claims, which further has a heating device (5) which is preferably arranged so that the latter is provided separately from the base device (2) and/or the layer-like material (12) can be fed from the base device (2) to the heating device (5) using the handling device (3).

8. Device (1) according to one of the preceding claims, in which the base device (2) has a cooling device for cooling a workpiece.

9. Device (1) according to one of the preceding claims, further having a feeding device (6) for the layer-like material (12) which is preferably designed to feed the material to the base device (2).

10. Device (1) according to one of the preceding claims, further having a processing device, in particular cutting and/or stamping device, for the layer-like material (12) which can preferably be substituted into the interface device of the base device (2) and/or can be accommodated in the receiving device (4).

11. Device (1) according to one of the preceding claims, further having a vacuum device which is preferably provided in the base device (2).

12. Method for processing a layer-like material (12) which preferably consists at least in sections of plastic, textile, leather or a combination thereof, using the device (1) according to one of the preceding claims, comprising
feeding a layer-processing device from the receiving device (4) to the base device (2) using the handling device (3), wherein the handling device (3) substitutes the layer-processing device preferably into the interface device of the base device (2),
feeding a layer-like material to the base device (2),
processing the layer-like material (12) using the substituted layer-processing device.

13. Method according to claim 12, further having the steps
removing the layer-processing device from the base device (2) using the handling device (3),
feeding and placing the removed layer-processing device in the receiving device (4) using the handling device (3),
feeding a further layer-processing device to the base device (2) using the handling device (3), wherein the handling device (3) substitutes the further layer-processing device preferably into the interface device of the base device (2).

## Revendications

1. Dispositif (1) destiné au traitement d'un matériau en couches (12) qui est constitué de préférence au moins en partie d'une matière plastique, de textile, de cuir ou d'une combinaison de ces matériaux, avec
- un dispositif de base (2), qui comporte un dispositif d'interface destiné à installer au moins un dispositif de traitement de couches,
- un dispositif récepteur (4) destiné à recevoir au moins un dispositif de traitement de couches,
- un dispositif de manipulation (3) pour amener un dispositif de traitement de couches du dispositif récepteur (4) au dispositif de base (2), et
- au moins deux dispositifs de traitement de couches, qui peuvent être installés dans le dispositif d'interface du dispositif de base (2) et être reçus au moins partiellement dans le dispositif récepteur (4),
**caractérisé en ce que** les au moins deux dispositifs de traitement de couches offrent différentes technologies de traitement de couches,
les dispositifs de traitement de couches étant choisis parmi un dispositif de contre-collage, en particulier un dispositif de contre-collage à la presse, un dispositif de rembordage, un dispositif de thermoformage et un dispositif de contre-collage d'inserts.

2. Dispositif (1) selon la revendication 1, dans lequel au moins l'un des dispositifs de traitement de couches, de préférence tous, comportent un outil inférieur et un outil supérieur, le dispositif de traitement de couches comportant notamment de préférence plusieurs outils supérieurs.

3. Dispositif (1) selon l'une quelconque des revendications précédentes, dans lequel le dispositif d'interface comporte une première interface destinée à l'installation d'un outil supérieur et une deuxième interface destinée à l'installation d'un outil inférieur d'un dispositif de traitement de couches.

4. Dispositif (1) selon la revendication 3, dans lequel le dispositif de base (2) comporte un dispositif élévateur (10) destiné au déplacement relatif d'un outil supérieur et d'un outil inférieur installés.

5. Dispositif (1) selon l'une quelconque des revendications précédentes, dans lequel celui-ci comporte un dispositif de contre-collage à la presse, un dispositif de rembordage, un dispositif de thermoformage et un dispositif de contre-collage d'inserts.

6. Dispositif (1) selon l'une quelconque des revendications précédentes, dans lequel le dispositif de base (2) ne comporte pas de dispositif de chauffage.

7. Dispositif (1) selon l'une quelconque des revendications précédentes, qui comporte en outre un dispositif de chauffage (5), lequel est agencé de préférence de telle sorte qu'il soit prévu séparément du dispositif de base (2) et/ou que le matériau en couches (12) puisse lui être amené du dispositif de base (2) avec le dispositif de manipulation (3).

8. Dispositif (1) selon l'une quelconque des revendications précédentes, dans lequel le dispositif de base (2) comporte un dispositif de refroidissement destiné à refroidir une pièce.

9. Dispositif (1) selon l'une quelconque des revendications précédentes, avec en outre un dispositif d'amenée (6) pour le matériau en couches (12), lequel dispositif d'amenée est conçu de préférence pour amener le matériau au dispositif de base (2).

10. Dispositif (1) selon l'une quelconque des revendications précédentes, avec en plus un dispositif de traitement, en particulier un dispositif de découpe et/ou d'estampage, pour le matériau en couches (12), lequel dispositif de traitement peut être installé de préférence dans le dispositif d'interface du dispositif de base (2) et/ou reçu dans le dispositif récepteur (4).

11. Dispositif (1) selon l'une quelconque des revendications précédentes, avec en plus un dispositif à vide, qui est prévu de préférence dans le dispositif de base (2).

12. Procédé de traitement d'un matériau en couches (12), qui est constitué de préférence au moins en partie d'une matière plastique, de textile, de cuir ou d'une combinaison de ces matériaux, en utilisant le dispositif (1) selon l'une quelconque des revendications précédentes, comprenant :
- l'amenée d'un dispositif de traitement de couche du dispositif récepteur (4) au dispositif de base (2) avec le dispositif de manipulation (3), lequel dispositif de manipulation (3) installe le dispositif de traitement de couches de préférence dans le dispositif d'interface du dispositif de base (2),
- l'amenée d'un matériau en couches au dispositif de base (2),
- le traitement du matériau en couches (12) avec le dispositif de traitement de couches installé.

13. Procédé selon la revendication 12 avec en outre les étapes suivantes :
- le retrait du dispositif de traitement de couches du dispositif de base (2) avec le dispositif de manipulation (3),
- l'amenée et le dépôt du dispositif de traitement de couches retiré dans le dispositif récepteur (4) avec le dispositif de manipulation (3),
- l'amenée d'un autre dispositif de traitement de couches au dispositif de base (2) avec le dispositif de manipulation (3), lequel dispositif de manipulation (3) installe l'autre dispositif de traitement de couches de préférence dans le dispositif d'interface du dispositif de base (2).
